# EUROPÄISCHE PATENTSCHRIFT

(11) **EP 4 290 060 B1**
(45) Veröffentlichungstag und Bekanntmachung des Hinweises auf die Patenterteilung: **07.05.2025**
(21) Anmeldenummer: 23174848.4
(22) Anmeldetag: 23.05.2023
(51) Int. Cl.: F01P 3/18, B60K 11/04, B62J 41/00, F28D 1/047, F28D 21/00, F28D 1/02

(54) **KÜHLVORRICHTUNG**
A COOLING DEVICE
DISPOSITIF DE REFROIDISSEMENT

(30) Priorität: 08.06.2022 AT 503992022
(43) Veröffentlichungstag der Anmeldung: 13.12.2023
(73) Patentinhaber: KTM AG, 5230 Mattighofen (AT)
(72) Erfinder: MAGELE, Martin, 5261 Uttendorf (AT)
(74) Vertreter: Torggler & Hofmann Patentanwälte - Innsbruck

(56) Entgegenhaltungen:
- EP-A1- 1 445 435
- WO-A1-2005/105504
- JP-A- 2013 127 341
- JP-A- H06 219 367
- JP-U- H04 118 891
- US-A1- 2007 204 978
- US-B2- 10 670 344

## Beschreibung

Die Erfindung betrifft eine Kühlvorrichtung zur Flüssigkeitskühlung, insbesondere eines Motors eines Motorrads, wobei die Kühlvorrichtung ein plattenförmiges Kühlnetz für den Wärmeaustausch zwischen einem Kühlmittel und Umgebungsluft aufweist. Des Weiteren betrifft die Erfindung ein Motorrad mit einer solchen Kühlvorrichtung. Zudem betrifft die Erfindung ein Verfahren zur Herstellung einer Kühlvorrichtung.

Mit "Kühlnetz" wird allgemein jener Teil der Kühlvorrichtung bezeichnet, in welchem der Großteil des Wärmeaustauschs von Kühlmittel und Umgebungsluft stattfindet. Das Kühlnetz kann mindestens ein Kühlrohr aufweisen, wobei das mindestens eine Kühlrohr mit mehreren, insbesondere mäanderförmigen, Kurven durch das Kühlnetz führt. Zudem kann das Kühlnetz Kühlrippen aufweisen, wobei die Kühlrippen mit dem mindestens einen Kühlrohr in Wärmeverbindung stehen. Das mindestens eine Kühlrohr und die Kühlrippen weisen eine große Oberfläche auf, sodass ein effizienter Wärmeaustausch des im mindestens einen Kühlrohr befindlichen Kühlmittels und der Umgebungsluft stattfinden kann.

"Plattenförmig" heißt, dass eine Tiefendimension wesentlich kleiner die zwei anderen Dimensionen ist. Unter "plattenförmig" fällt in dieser Anmeldung auch eine gebogene Platte, selbst wenn diese Platte nicht durch die Umformungsart "Biegen" gebogen ist.

Kühlvorrichtungen der eingangs genannten Art sind als Stand der Technik bereits bekannt. Sie werden im Allgemeinen dazu verwendet, den Motor, das Motoröl oder andere Bauteile eines Motorrads mittels eines flüssigen Kühlmittels zu kühlen. Typischerweise führen Kühlleitungen, welche an Kühlmitteleinlässe und Kühlmittelauslässe der Kühlvorrichtung angeschlossen sind, von der Kühlvorrichtung zu dem zu kühlenden Teil des Motorrads. In diesen Leitungen zirkuliert, gegebenenfalls von einer Pumpe angetrieben, das flüssige Kühlmittel. Das flüssige Kühlmittel kann beispielsweise ein Gemisch aus Wasser und Glykol sein. Es können aber auch andere Kühlmittel, wie Öl, vorgesehen sein, wobei die Kühlvorrichtung insbesondere als Rohr-Ölkühler ausgebildet sein kann.

Dadurch kann Wärme aus dem zu kühlenden Bauteil abgeführt werden und insbesondere beim Durchfließen des Kühlnetzes an die Umgebungsluft abgegeben werden. Um einen effizienten Wärmeaustausch zu gewährleisten, weist das Kühlnetz gewundene Rohre mit einer großen Oberfläche auf, welche vom Kühlmittel durchflossen werden.

Bei langsamer Fahrt oder im Stand des Motorrads, kann Wärme nur langsam an die Umgebungsluft abgegeben werden. Daher ist oft ein Lüfter am Kühlnetz vorgesehen, welcher bei Bedarf zugeschaltet wird. Typischerweise ist der Lüfter zwischen dem Kühlnetz und dem Motor angeordnet und saugt Luft durch das Kühlnetz.

Ebenfalls als Stand der Technik bekannt sind Kühlnetze mit einer gebogenen Form. Dadurch kann die Fläche des Kühlnetzes bei gleicher Seitenausdehnung vergrößert werden.

Die Anordnung eines Lüfters an gebogenen Kühlnetzen ist jedoch problematisch, da der Lüfter nicht zum Großteil direkt am Kühlnetz anliegt und die Größe der Lüfter durch die Biegung limitiert ist. Dadurch wird die Kühlleistung verringert. Zudem können zusätzliche Bauteile, wie beispielsweise eine Halterung zum Befestigen der Kühlvorrichtung am Motorrad, erst nach dem Biegen des Kühlnetzes montiert werden. Dadurch, dass das Biegen vorzugsweise nach dem Löten des Kühlnetzes durchgeführt wird, kann ein zusätzliches Bauteil nicht vor dem Löten am Kühlnetz angeordnet werden, wodurch das Bauteil nicht mitangelötet werden kann.

Ein weiterer Nachteil eines Kühlnetzes mit gebogener Form gegenüber einem ebenen Kühlnetz ist, dass im Betriebszustand der Kühlvorrichtung ein großer Teil der Oberfläche schräg zur Fahrtrichtung ausgerichtet ist, womit das Kühlnetz nicht ohne Umlenkung von Luft durchströmt werden kann, da die Kühlrippen typischerweise im Wesentlichen senkrecht auf die Oberfläche des Kühlnetzes ausgerichtet sind. Dadurch entsteht ein erhöhter Widerstand.

Mit einer "Biegung" des Kühlnetzes wird eine Krümmung eines im Wesentlichen plattenförmigen Kühlnetzes um mindestens 1° bezeichnet. Die Krümmung kann durch die Umformungsart "Biegen" ausgehend von einem ebenen Kühlnetz erzeugt werden. Es sind jedoch auch andere Herstellungsarten denkbar.

Das japanische Patent JP 6428346 B2 zeigt ein gebogenes Kühlnetz, wobei der Lüfter an einer exzentrischen, ebenen Seitenfläche angeordnet ist. An eine solche exzentrische Anordnung des Lüfters muss jedoch auch der Rest eines Motorrads angepasst werden, was einen konstruktiven Mehraufwand mit sich bringt. Auch können Halterungen zum Befestigen des Lüfters am Motorrad nur nachträglich in der Biegung des Kühlnetzes angebracht werden oder müssen an den Seiten des Kühlnetzes angebracht werden. In beiden Fällen geht damit ein herstellungstechnischer Mehraufwand einher.

Aus dem Stand der Technik bekannte ausführungsformen von Kühlvorrichtungen für ein Motorrad gehen beispielsweise aus der US 10 670 344 B2, der WO 2005/105504 A1 oder der EP 1 445 435 A1 hervor.

Die Druckschrift JPH06219367A zeigt eine Kühlvorrichtung gemäß dem Oberbegriff des Anspruchs.

Die Aufgabe der vorliegenden Erfindung ist es, eine Kühlvorrichtung, ein Motorrad mit einer Kühlvorrichtung und ein Verfahren zu Herstellung einer Kühlvorrichtung zu schaffen, welche die Nachteile des Stands der Technik zumindest teilweise vermeidet. Insbesondere soll eine Kühlvorrichtung geschaffen werden, welche eine gute Kühlleistung des Kühlmittels ermöglicht, platzsparend ist und eine vereinfachte und kostengünstigere Befestigung von zusätzlichen Bauteilen ermöglicht.

Die Aufgabe wird durch eine Kühlvorrichtung nach Anspruch 1, ein Motorrad nach Anspruch 10 und ein Verfahren zur Herstellung einer Kühlvorrichtung nach Anspruch 12 gelöst.

Erfindungsgemäß ist vorgesehen, dass das Kühlnetz einen ebenen Mittelbereich aufweist ist, wobei das Kühlnetz an mindestens zwei, vorzugsweise gegenüberliegenden, Seiten des ebenen Mittelbereichs jeweils eine Biegung aufweist.

Dadurch werden die Vorteile eines gebogenen Kühlnetzes mit den Vorteilen eines ebenen Kühlnetzes kombiniert.

Dadurch, dass das Kühlnetz einen ebenen Mittelbereich aufweist, weist die vorliegende Erfindung im Mittelbereich die Vorteile eines ebenen Kühlnetzes auf.

Der ebene Mittelbereich kann besser von Luft durchströmt werden, insbesondere da die Kühlrippen im Wesentlichen senkrecht auf die Oberfläche des Kühlnetzes ausgerichtet sind. Die Luft kann im Mittelbereich im Wesentlichen gerade durch das Kühlnetz strömen.

Ein Vorteil eines ebenen Kühlnetzes ist die vereinfachte Montage eines Lüfters zentral und direkt am Kühlnetz, wobei auch größere Lüfter in Standardausführung verbaut werden können. Dadurch wird die Kühlleistung erhöht während Kosten gespart werden. Ein weiterer Vorteil eines ebenen Kühlnetzes ist, dass zusätzliche Bauteile wie eine Halterung zum Befestigen des Kühlnetzes am Motorrad zusammen mit dem Kühlnetz in einem Schritt gelötet werden können. Ein nachträgliches Anschweißen oder Verschrauben der zusätzlichen Bauteile entfällt somit.

Dadurch, dass das Kühlnetz an mindestens zwei, vorzugsweise gegenüberliegenden, Seiten des ebenen Mittelbereichs jeweils eine Biegung aufweist, weist die Erfindung auch die Vorteile eines gebogenen Kühlnetzes auf. Ein Vorteil eines gebogenen Kühlnetzes ist die größere Fläche des Kühlnetzes bei gleicher Seitenausdehnung. Damit ist die Seitenausdehnung des Motorrads geringer oder es wird mehr Platz für andere Bauteile des Motorrads, beispielsweise für einen Spoiler, geschaffen.

In einem bevorzugten Ausführungsbeispiel ist das Kühlnetz an mindestens zwei gegenüberliegenden Seiten des ebenen Mittelbereichs in die gleiche Richtung gebogen. In anderen Worten sind also beide Biegungen von einer ersten Seite gesehen konkav und von einer zweiten Seite gesehen konvex ausgebildet. Ist die Kühlvorrichtung in Einbaulage am Motorrad von der Vorderseite des Motorrads aus gesehen konkav ausgebildet, kann während der Fahrt mehr Luft gesammelt werden, was die Kühlleistung vergrößert. Es ist dabei bevorzugt vorgesehen, dass das gesamte Kühlnetz, von einer ersten Seite gesehen konkav und von einer zweiten Seite gesehen konvex ausgebildet ist.

In einem Ausführungsbeispiel ist das Kühlnetz entlang einer Richtung nicht gebogen. In anderen Worten sind die Biegeachsen aller Biegungen des Kühlnetzes parallel zueinander und zur erwähnten Richtung. Es ist dabei vorzugsweise vorgesehen, dass diese eine Richtung einer Breitenrichtung des Kühlnetzes entspricht. Das Kühlnetz ist so in eine Längsrichtung gebogen und in eine Breitenrichtung nicht gebogen.

Es kann vorgesehen sein, dass der ebene Mittelbereich im Wesentlichen rechteckig ausgeformt ist.

Zusätzlich oder alternativ kann der ebene Mittelbereich im Flächenzentrum des Kühlnetzes angeordnet sein. So kann ein Lüfter und/oder eine Halterung zum Befestigen des Kühlnetzes am Motorrad zentral angeordnet werden.

Bevorzugt ist vorgesehen, dass der ebene Mittelbereich eine Fläche von mehr als einem Viertel, insbesondere mehr als einem Drittel der Gesamtfläche des Kühlnetzes einnimmt. Damit kann ein relativ großer Lüfter am ebenen Mittelbereich angeordnet werden.

In einem weiteren Ausführungsbeispiel kann vorgesehen sein, dass der ebene Mittelbereich eine Fläche von 200 bis 400, insbesondere in etwa 330, Quadratzentimeter einnimmt. So kann auch ein relativ großer Lüfter, beispielsweise mit in etwa 195 mm Durchmesser, zum Großteil im ebenen Bereich angeordnet werden.

Dadurch, dass der Lüfter am ebenen Mittelbereich des Kühlnetzes anliegt, wird der Lüfter einfach mittels geeigneter Befestigungsmittel, welche z. B. durch das Kühlnetz verlaufen, befestigt, direkt am Kühlnetz.

Es kann vorgesehen sein, dass das Kühlnetz im Wesentlichen als eine gebogene, rechteckige Platte ausgebildet ist, wobei das Kühlnetz eine Längsrichtung und eine Breitenrichtung aufweist, wobei das Kühlnetz in Längsrichtung länger als in Breitenrichtung ist und die Längsrichtung orthogonal auf die Breitenrichtung steht.

In der Längsrichtung kann der ebene Mittelbereich kürzer als in der Breitenrichtung des Kühlnetzes sein. Zusätzlich oder alternativ kann der ebene Mittelbereich in der Längsrichtung des Kühlnetzes zwischen 140 mm und 150 mm, vorzugsweise in etwa 145 mm, groß sein. Ein Lüfter, welcher beispielsweise in etwa 195 mm Durchmesser aufweist, kann daher zum Großteil im ebenen Mittelbereich angeordnet sein.

In der Längsrichtung des Kühlnetzes kann der ebene Mittelbereich mehr als ein Viertel, insbesondere mehr als ein Drittel, der Länge des Kühlnetzes einnehmen.

Der ebene Mittelbereich kann sich über die gesamte Breite des Kühlnetzes erstrecken. Damit ist auch eine angrenzende Stirnseite des Kühlnetzes in diesem Abschnitt gerade ausgebildet. An einem solchen geraden Abschnitt können Bauteile, insbesondere eine Halterung zum Befestigen des Kühlnetzes am Motorrad, auch vor dem Biegen des Kühlnetzes angebracht werden.

In einem Ausführungsbeispiel weisen die zwei, den ebenen Mittelbereich teilweise begrenzenden Biegungen den gleichen Biegeradius und/oder den gleichen Biegewinkel auf. Damit kann das Kühlnetz im Wesentlichen spiegelsymmetrisch ausgeformt sein.

Bevorzugt kann der Biegeradius mindestens einer Biegung zwischen 180 mm und 220 mm, insbesondere in etwa 200 mm, und/oder der Biegewinkel mindestens einer Biegung zwischen 18° und 22°, insbesondere in etwa 20°, betragen. Damit können ähnliche Außenmaße, wie jene eines aus dem Stand der Technik bekannten, einfachen gebogenen Kühlnetzes, erreicht werden. Die Kühlvorrichtung kann so auf Motorrädern gleicher Bauart angebracht werden.

Ein großer Biegewinkel führt vorteilhaft zu einer geringeren Ausdehnung bei gleicher Oberfläche des Kühlnetzes. Ein großer Biegewinkel führt aber auch zu einer stärkeren Umlenkung der Luft im Kühlernetz, da die Flächennormalen der Oberflächen jenseits der Biegungen immer stärker von der Strömungsrichtung der Luft bei der Fahrt des Motorrads verschieden sind. Für den Biegewinkel ist also ein Kompromiss unter Beachtung der genannten Bedingungen zu finden.

Erfindungsgemäß ist am ebenen Mittelbereich mindestens ein Lüfter angeordnet.

Vorzugsweise ist vorgesehen, dass der Lüfter flächenmäßig zum Großteil, besonders bevorzugt zu mehr als drei Viertel, innerhalb des ebenen Mittelbereichs angeordnet ist. Damit kann ein großer Standardlüfter ohne Zwischenraum am Kühlnetz angeordnet werden, womit die Kühlleistung erhöht wird.

Erfindungsgemäß ist vorgesehen, dass der Lüfter direkt am Kühlnetz, vorzugweise ohne Zwischenraum, angeordnet ist.

Der Lüfter ist dabei mittels Befestigungsmittel direkt am Kühlnetz befestigt. So ist keine weitere Befestigungsvorrichtung für den Kühler notwendig, was Bauteile und Kosten spart.

In einem weiteren Ausführungsbeispiel ist mindestens eine Halterung zum Befestigen des Kühlnetzes an einem Motorrad am Kühlnetz oder an mindestens einem Seitenband an mindestens einer Stirnseite des Kühlnetzes angeordnet.

Besonders bevorzugt ist die mindestens eine Halterung durch Löten am Kühlnetz beziehungsweise am mindestens einen Seitenband befestigt. Die Halterung kann damit zusammen mit dem Kühlnetz an sich in einem Arbeitsschritt durch Löten am Kühlnetz befestigt werden. Dadurch muss die Halterung nicht nachträglich angeschweißt oder angeschraubt werden.

Es kann vorgesehen sein, dass sich der ebene Mittelbereich bis an mindestens eine Stirnseite des Kühlnetzes erstreckt, wobei das mindestens eine Seitenband der mindestens einen Stirnseite in einem dem ebenen Mittelbereich angrenzenden Abschnitt gerade ausgeformt ist und wobei die mindestens eine Halterung an diesem geraden Abschnitt des mindestens einen Seitenbands angeordnet ist. Dadurch kann die mindestens eine Halterung vor einem Biegen des Kühlnetzes am mindestens einen Seitenband befestigt werden. Es wird dadurch ermöglicht, dass die mindestens eine Halterung beim Löten des Kühlnetzes, welches vor dem Biegen stattfinden muss, am mindestens einen Seitenband mitangelötet wird. Ein nachträgliches, händischen Anschweißen oder anderweitiges Befestigen der mindestens einen Halterung ist daher nicht mehr notwendig.

Es kann vorgesehen sein, dass das Kühlnetz und/oder mindestens eine Halterung zum Befestigen des Kühlnetzes an einem Motorrad und/oder mindestens ein Seitenband an einer Stirnseite des Kühlnetzes aus Aluminium gefertigt sind. Dies ermöglicht ein gemeinsames Recycling ohne Demontage.

Es kann vorgesehen sein, dass an einer dem ebenen Mittelbereich gegenüberliegenden Seite mindestens einer, vorzugsweise beider, Biegung(en) ein ebener Seitenbereich des Kühlnetzes angeordnet ist.

Es kann vorgesehen sein, dass an einer dem ebenen Mittelbereich gegenüberliegenden Seite mindestens einer, vorzugsweise beider, Biegung(en) ein Kühlmittelbehälter angeordnet ist. Besonders bevorzugt ist an beiden Enden des Kühlnetzes, jenseits der Biegungen, jeweils ein Kühlmittelbehälter angeordnet. Die Kühlrohre im Kühlnetz führen vom einen Kühlmittelbehälter in den anderen Kühlmittelbehälter.

Es kann vorgesehen sein, dass an einer dem ebenen Mittelbereich gegenüberliegenden Seite mindestens einer, vorzugsweise beider, Biegung(en) ein Kühlmitteleinlass und/oder ein Kühlmittelauslass angeordnet ist. Am Kühlmittelauslass und/oder am Kühlmitteleinlass sind Kühlleitungen, welche zum Motor eines Motorrads führen, anbringbar. Kühlmittel kann durch das mindestens eine Kühlrohr vom Kühlmitteleinlass zum Kühlmittelauslass fließen. Der Kühlmitteleinlass ist vorzugsweise an einem ersten Kühlmittelbehälter angeordnet, während der Kühlmittelauslass vorzugsweise an einem zweiten Kühlmittelbehälter angeordnet ist.

Erfindungsgemäß ist weiterhin ein Motorrad mit einer beschriebenen Kühlvorrichtung vorgesehen, wobei das Kühlnetz zwischen dem Vorderrad und dem Motor des Motorrads angeordnet ist.

In einem bevorzugten Ausführungsbeispiel des Motorrads ist das Kühlnetz an mindestens zwei gegenüberliegenden Seiten des ebenen Mittelbereichs in die Richtung des Vorderrads gebogen. Damit kann während der Fahrt von der Richtung des Vorderrads anströmende Luft besser gefasst werden.

Es ist vorzugsweise vorgesehen, dass der Lüfter zwischen dem Kühlnetz und dem Motor angeordnet ist. Durch diese zentrale Anordnung ist der Lüfter geschützt und nicht gut sichtbar angeordnet.

Es kann vorgesehen sein, dass Kühlmittelleitungen von der Kühlvorrichtung zum Motor und/oder zu einem Wärmetauscher zum Kühlen von Öl, beispielsweise von Motoröl für den Motor, führen. Die Kühlmittelleitungen sind an einen Kühlmitteleinlass und einen Kühlmittelauslass angeschlossen, sodass Kühlmittel die Kühlvorrichtung, insbesondere das mindestens eine Kühlrohr im Kühlnetz, durchfließen kann.

Ein erfindungsgemäßes Verfahren zur Herstellung einer Kühlvorrichtung weist die folgenden Verfahrensschritte auf:
- Bereitstellen eines im Wesentlichen plattenförmigen, ebenen, vorzugweise rechteckigen, Kühlnetzes,
- Biegen des Kühlnetzes an mindestens zwei Stellen, sodass das Kühlnetz an mindestens zwei, vorzugsweise gegenüberliegenden, Seiten eines ebenen Mittelbereichs jeweils eine Biegung aufweist.

Erfindungsgemäß sind die folgenden Verfahrensschritte vorgesehen:
- Anordnen mindestens eines Lüfters am ebenen Mittelbereich, wobei der Lüfter direkt am Kühlnetz, vorzugsweise ohne Zwischenraum, angeordnet wird,
- Befestigen des mindestens einen Lüfters mittels Befestigungsmittel direkt am Kühlnetz.

Bevorzugt wird das Kühlnetz vor dem Biegen des Kühlnetzes gelötet. Dabei werden die Einzelteile des Kühlnetzes, insbesondere das mindestens eine Kühlrohr und/oder die Kühlrippen, zusammengelötet. Zudem können Seitenbänder mitangelötet werden. Das fertig gelötete Kühlnetz, gegebenenfalls samt Seitenbändern, kann dann gebogen werden.

Es kann zudem vorgesehen sein, dass vor dem Löten am Kühlnetz oder an mindestens einem Seitenband an einer Stirnseite des Kühlnetzes eine Halterung angeordnet wird und dass die Halterung beim Löten des Kühlnetzes am Kühlnetz beziehungsweise am Seitenband, mitangelötet wird. Damit muss die Halterung nicht in einem zusätzlichen Arbeitsschritt angeschweißt oder anderweitig angebracht werden. Die Halterung kann in einem an den ebenen Bereich angrenzenden Abschnitt des Seitenbands oder direkt am Kühlnetz angeordnet werden, wobei dieser Abschnitt durch das Biegen nicht verbogen wird und als gerader Abschnitt bestehen bleibt.

Weitere Ausführungsbeispiele und Details sind aus den Figuren ersichtlich. Dabei zeigen:
- Fig. 1: Kühlvorrichtung mit gebogenem Kühlnetz (Stand der Technik) in perspektivischer Ansicht
- Fig. 2a: Kühlvorrichtung mit ebenem Bereich und zwei Biegungen und Halterung in perspektivischer Ansicht
- Fig. 2b: Kühlvorrichtung mit ebenem Bereich und zwei Biegungen ohne Halterung in alternativer perspektivischer Ansicht
- Fig. 3: Vergleich der Kühlvorrichtungen aus den Figuren 1 und 2b
- Fig. 4: Die Kühlvorrichtung aus Fig. 2b mit Lüfter
- Fig. 5: Biegevorrichtung
- Fig. 6: Verfahren zur Herstellung einer Kühlvorrichtung

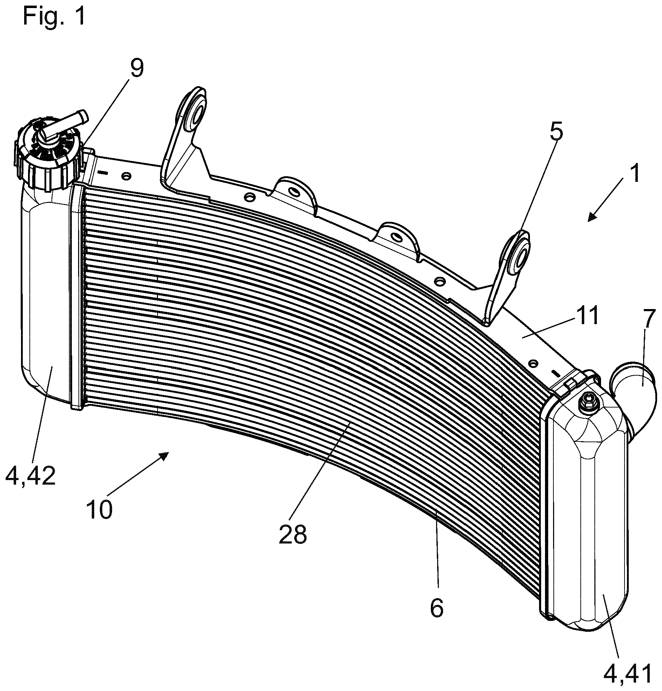

Die Fig. 1 zeigt eine aus dem Stand der Technik bekannte Kühlvorrichtung 1. Die Kühlvorrichtung 1 umfasst ein Kühlnetz 28, zwei Kühlmittelbehälter 4, insbesondere einen ersten Kühlmittelbehälter 41 und einen zweiten Kühlmittelbehälter 42, und eine Halterung 5 zum Befestigen der Kühlvorrichtung 1 an einem Motorrad.

Das Kühlnetz 28 weist Kühlrippen 6 auf. Die Kühlrippen 6 sind mit mindestens einem Kühlrohr wärmeleitend verbunden, wobei das mindestens eine Kühlrohr im Inneren des Kühlnetzes 28 angeordnet ist und daher nicht ersichtlich ist.

Durch das mindestens eine Kühlrohr kann Kühlmittel von einem ersten Kühlmittelbehälter 41 in einen zweiten Kühlmittelbehälter 42 fließen, wobei das Kühlmittel am Weg durch Wärmeaustausch mit der Umgebungsluft gekühlt wird.

Der erste Kühlmittelbehälter 41 weist dabei einen Kühlmitteleinlass 7 auf und der zweite Kühlmittelbehälter 42 weist einen Kühlmittelauslass 8 auf. Kühlleitungen, welche an den Kühlmitteleinlass 7 und den Kühlmittelauslass 8 angebracht sind, führen das Kühlmittel von der Kühlvorrichtung 1 zu einem zu kühlenden Bauteil des Motorrads, beispielsweise zum Motor oder zu einem Wärmeaustauscher zum Kühlen von Öl, beispielweise von Motoröl. Zudem wird das erhitzte Kühlmittel durch Kühlleitungen wieder zurück zur Kühlvorrichtung 2 geführt und dort im Kühlnetz 28 gekühlt.

Einer der beiden Kühlmittelbehälter 4 weist eine Einfüllöffnung 9 mit Deckel auf, durch welche Kühlmittel in die Kühlvorrichtung 1 eingebracht und nachgefüllt werden kann.

Das Kühlnetz 28 ist als im Wesentlichen rechteckige, gebogene Platte ausgeformt. Das Kühlnetz 28 weist eine Biegung 10 auf, wobei sich die Biegung über einen Großteil des Kühlnetzes 28, insbesondere auch durch das Zentrum des Kühlnetzes 28, erstreckt.

Das Kühlnetz 28 weist eine Längsrichtung und eine Breitenrichtung auf, wobei das Kühlnetz 28 in Längsrichtung gebogen ist und in Breitenrichtung nicht gebogen ist.

Die Halterung 5 ist an einem Seitenband 11 an einer Stirnseite des Kühlnetzes 28 befestigt. Das Seitenband 11 ist im Bereich der Biegung 10 angeordnet, sodass auch das Seitenband 11 gebogen ist. Die Halterung 5 ist notwendigerweise dieser Biegung 10 angepasst.

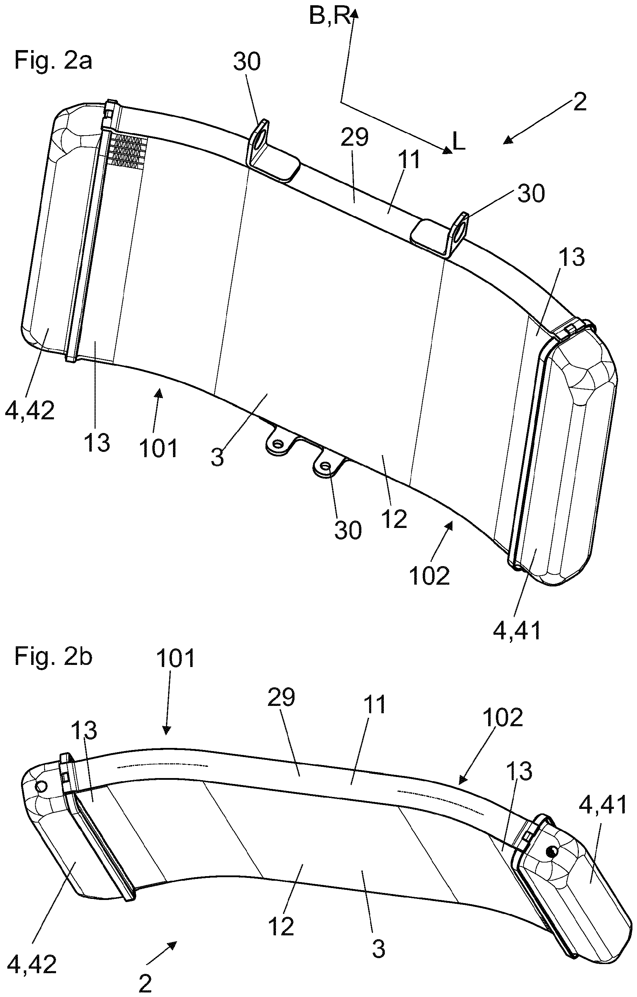

Die Figuren 2a und 2b zeigen eine erfindungsgemäße Kühlvorrichtung 2. Im Gegensatz zum Stand der Technik (Kühlnetz 28) weist das Kühlnetz 3 hier einen ebenen Mittelbereich 12 auf, wobei das Kühlnetz 3 an mindestens zwei, vorzugsweise gegenüberliegenden, Seiten des ebenen Mittelbereichs 12 jeweils eine Biegung 101, 102 aufweist. Es sind also mindestens zwei Biegungen, also eine erste Biegung 101 und eine zweite Biegung 102, vorgesehen.

Weitere Eigenschaften des Kühlnetzes 3 können dem Kühlnetz 28 aus dem Stand der Technik entsprechen.

Die zwei Biegungen 101, 102 weisen den gleichen Biegeradius und den gleichen Biegewinkel auf.

Der Biegeradius beträgt in diesem Ausführungsbeispiel in etwa 200 mm und der Biegewinkel beträgt in etwa 20°. Es sind jedoch auch andere Maße denkbar.

Entlang einer Richtung R, welche einer Breitenrichtung B des Kühlnetzes 3 entspricht, ist das Kühlnetz 3 nicht gebogen.

Der ebene Mittelbereich 12 ist im Wesentlichen rechteckig ausgeformt und im Flächenzentrum des Kühlnetzes 3 angeordnet. Er nimmt eine Fläche von mehr als einem Viertel, insbesondere mehr als einem Drittel der Gesamtfläche des Kühlnetzes 3 ein. In absoluten Zahlen kann der ebene Mittelbereich 12 in etwa eine Fläche von 200 bis 400, insbesondere in etwas 330, Quadratzentimeter einnehmen. Es sind aber auch andere Maße denkbar.

Zudem ist der ebene Mittelbereich 12 in der Längsrichtung L des Kühlnetzes 3 kürzer als in der Breitenrichtung B des Kühlnetzes 3. In absoluten Zahlen kann der ebene Mittelbereich 12 in der Längsrichtung L des Kühlnetzes 3 zwischen 140 mm und 150 mm, vorzugsweise in etwa 145 mm, einnehmen. Das entspricht mehr als einem Viertel, insbesondere mehr als einem Drittel, der Länge des Kühlnetzes 3. Es sind aber auch andere Maße denkbar.

Der ebene Mittelbereich 12 erstreckt sich über die gesamte Breite des Kühlnetzes 3. Demnach erstreckt sich der Mittelbereich 12 an beiden Seiten bis an die Stirnseite des Kühlnetzes 3, sodass die Seitenbänder 11 im angrenzenden Abschnitt 29 gerade sind.

An diesen geraden Abschnitten 29 der Seitenbänder 11 kann eine Halterung 30 zum Befestigen der Kühlvorrichtung 2 an einem Motorrad angeordnet werden. Eine solche Halterung ist in Fig. 2a gezeigt.

Dadurch, dass es ermöglicht wird, die Halterung 30 in einem geraden Abschnitt 29 eines Seitenbandes 11 anzuordnen, kann die Halterung 30 auch vor dem Biegen des Kühlnetzes 3 am Seitenband 11 angebracht werden. Insbesondere kann die Halterung 30 zusammen mit dem Löten des Kühlnetzes 3 (Kühlrohre und Kühlrippen) und der Seitenbänder 11 angelötet werden.

Wie auch im Stand der Technik, sind an den dem ebenen Mittelbereich 12 gegenüberliegenden Seiten der Biegungen 101, 102 jeweils ein ebener Seitenbereich 13, ein Kühlmitteleinlass 7, ein Kühlmittelauslass 8 und jeweils ein Kühlmittelbehälter 4, 41, 42 angeordnet.

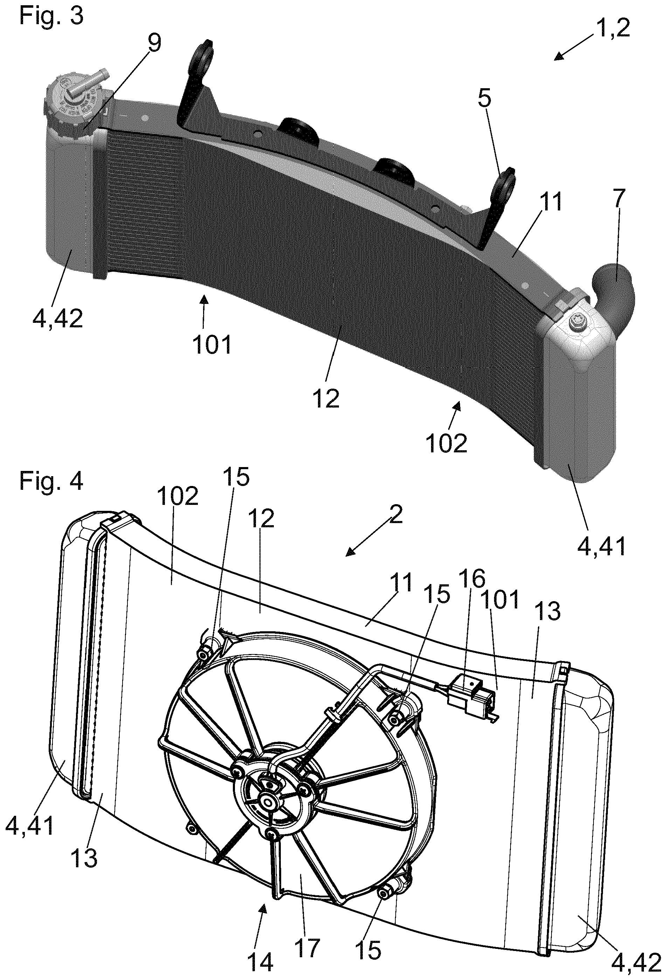

Die Fig. 3 zeigt die Kühlvorrichtung 1 aus dem Stand der Technik (Fig. 1) und die erfindungsgemäße Kühlvorrichtung 2 (insbesondere Fig. 2b) zeichnerisch übereinandergelegt. Die Halterung 5 entspricht hier der gebogenen Halterung 5 aus der Fig. 1. Der Biegewinkel im Endbereich ist in etwa gleich.

Aus der Fig. 3 ist ersichtlich, dass der ebene Mittelbereich 12 die Biegung 10 der Kühlvorrichtung 1 aus dem Stand der Technik (Fig. 1) auf kürzerem Weg abschneidet. Dadurch baut die Kühlvorrichtung 2 mit dem ebenen Mittelbereich 12 weniger tief als die Kühlvorrichtung 1 aus dem Stand der Technik. Im Montagezustand am Motorrad wird dadurch mehr Platz zwischen dem Vorderrad und dem Motor geschaffen.

Dadurch bleibt auch insbesondere mehr Platz für einen Lüfter 14, welcher in Fig. 4 dargestellt ist.

Die Fig. 4 zeigt eine Kühlvorrichtung 2 mit einem ebenen Mittelbereich 12, wobei ebenso ein Lüfter 14 dargestellt ist. Der Lüfter 14 ist am ebenen Mittelbereich 12 angeordnet. Er ist zum Großteil, insbesondere zu mehr als drei Viertel, innerhalb des ebenen Mittelbereichs 12 angeordnet.

Der Lüfter 14 ist direkt am Kühlnetz 3, insbesondere direkt an den Kühlrippen 6, angeordnet. Er ist mittels Befestigungsmittel 15 direkt am Kühlnetz 3 befestigt. Damit ist keine aufwendige Befestigung, beispielsweise an den Seitenbändern 11 notwendig.

Der in Fig. 4 dargestellte Lüfter 14 entspricht einer typischen Standardausführung eines Lüfters. Aufgrund der Montage im ebenen Mittelbereich 12, ist es insbesondere auch möglich, dass der Lüfter 14 ein Standard-Gehäuse 17 aufweist. Dennoch liegt der Lüfter 14 flächig am Kühlnetz 3 auf.

Durch den ebenen Mittelbereich 12 kann damit ein größerer Lüfter 14 als bei durchgängig gebogenen Kühlnetzen 28 gewählt werden. Dadurch kann das Kühlmittel effizienter gekühlt werden.

Der Lüfter 14 weist einen rotierbaren Lüfterflügel auf, welcher eine Länge von in etwa 195 mm aufweisen kann. Dieser steht nicht allzu weit über den ebenen Mittelbereich 12 hinaus. Der rotierbare Lüfterflügel wird in der Fig. 4 vom Gehäuse 17 verdeckt.

Der Lüfter 14 wird vorzugsweise elektrisch betrieben und weist dafür einen Stromanschluss 16 auf.

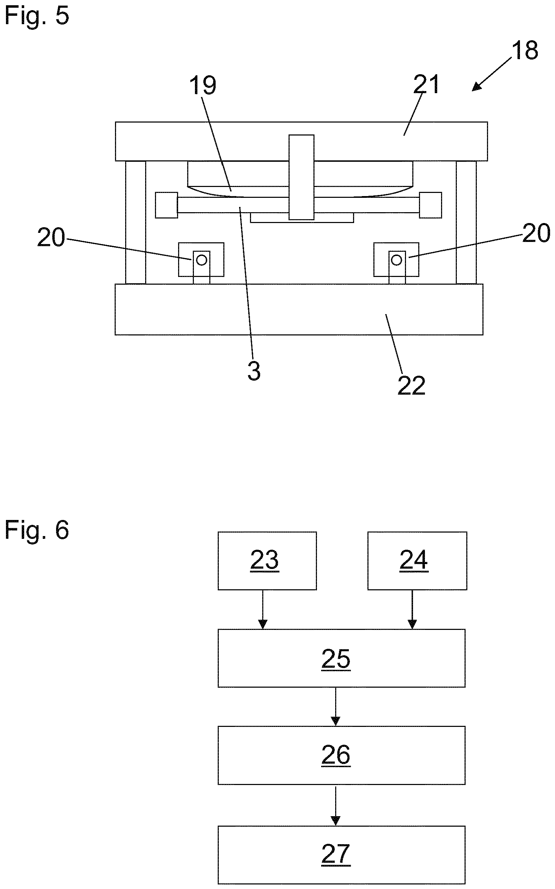

Die Fig. 5 zeigt eine Biegevorrichtung 18 zum Biegen einer Kühlvorrichtung 2, insbesondere zur Herstellung des Kühlnetzes 3. Die Biegevorrichtung 18 weist eine Form 19 auf, welche an einer beweglichen Platte 21 angebracht ist. An die Form 19 kann das nicht gebogene Kühlnetz in einem Mittelbereich angeklemmt werden. Die konvexe Form 19 weist einen ebenen Mittelbereich und an zwei gegenüberliegenden Seiten des ebenen Mittelbereichs zwei Krümmungen auf.

An einem fest stehenden Tisch 22 sind zwei drehbar gelagerte Gegenstücke 20 angeordnet. Die beiden Gegenstücke 20 sind so voneinander beabstandet angeordnet, dass sie im Wesentlichen unter den seitlichen Randbereichen des ungebogenen Kühlnetzes angeordnet sind.

Zum Biegen wird nun die bewegliche Platte 21 samt der Form 19 und dem angeklemmten Kühlnetz 3 nach unten an die beiden Gegenstücke 20 gedrückt, sodass das Kühlnetz 3 gebogen wird. Während dem Anpressen werden die Gegenstücke 20 verdreht, sodass diese am Ende des Biegevorgangs wie die ebenen Seitenbereiche 13 des Kühlnetzes 3 geneigt sind und an den ebenen Seitenbereichen 13 anliegen.

Während dem Biegeprozess ist das Kühlnetz 3 (gegebenenfalls samt den Seitenbändern 11) vorzugsweise bereits verlötet. Zudem kann eine Halterung 30 bereits am nicht zu biegenden Bereich befestigt, insbesondere angelötet, sein.

Die Fig. 6 zeigt ein Blockdiagramm eines Verfahrens zur Herstellung einer Kühlvorrichtung 2.

In einem Verfahrensschritt 23 wird ein im Wesentlichen plattenförmiges, ebenes Kühlnetz 3 bereitgestellt. In diesem Stadium sind die Kühlrippen 6 und das mindestens eine Kühlrohr noch nicht fest miteinander verbunden.

Parallel dazu wird eine Halterung zum Befestigen der Kühlvorrichtung 2 an einem Motorrad bereitgestellt (Verfahrensschritt 24).

In einem weiteren Verfahrensschritt 25 wird die Halterung am Kühlnetz 3 oder an einem Seitenband 11 an einer Stirnseite des Kühlnetzes 3, angeordnet. Besonders bevorzugt wird die Halterung 30 in einem zentralen Bereich des Kühlnetzes 3 beziehungsweise des Seitenbands 11, angeordnet. Zudem wird ein Lot an die Verbindungsstellen angebracht.

In einem weiteren Verfahrensschritt 26 wird das Kühlnetz 3 und die Halterung 30 und gegebenfalls die Seitenbänder 11 gelötet, vorzugsweise in einem Ofen. Es kann also in einem Schritt das Kühlnetz 3 an sich (Kühlrippen 6 und Kühlrohr), Seitenbänder 11 und die Halterung 30 gelötet werden.

In einem letzten Verfahrensschritt 27 wird das Kühlnetz 3, vorzugsweise mittels der Biegevorrichtung 18 aus Fig. 5, an mindestens zwei Stellen gebogen, sodass das Kühlnetz 3 an mindestens zwei, vorzugsweise gegenüberliegenden, Seiten eines ebenen Mittelbereichs 12 jeweils eine Biegung 101, 102 aufweist.

Die Halterung 30 ist so angeordnet, dass sie an einem geraden Abschnitt 29 des Kühlnetzes 3 oder des Seitenbands 11 verbleibt. Dadurch ist die Halterung 30 vom Biegen nicht betroffen. Insbesondere wird die Halterung 30 nicht mitgebogen, was herstellungstechnisch auch nicht, oder nur sehr schwer, möglich wäre.

### Bezugszeichenliste:

- 1: Kühlvorrichtung (Stand der Technik)
- 2: Kühlvorrichtung
- 3: Kühlnetz
- 4: Kühlmittelbehälter
- 41: erster Kühlmittelbehälter
- 42: zweiter Kühlmittelbehälter
- 5: Halterung (Stand der Technik)
- 6: Kühlrippen
- 7: Kühlmitteleinlass
- 8: Kühlmittelauslass
- 9: Einfüllöffnung
- 10: Biegung
- 101: erste Biegung
- 102: zweite Biegung
- 11: Seitenband
- 12: ebener Mittelbereich
- 13: ebener Seitenbereich
- 14: Lüfter
- 15: Befestigungsmittel
- 16: Stromanschluss
- 17: Gehäuse
- 18: Biegevorrichtung
- 19: Form
- 20: Gegenstück
- 21: bewegliche Platte
- 22: Tisch
- 23: Bereitstellen eines ebenen Kühlnetzes
- 24: Bereitstellen einer Halterung
- 25: Anordnen
- 26: Löten
- 27: Biegen
- 28: Kühlnetz (Stand der Technik)
- 29: gerader Abschnitt eines Seitenbandes
- 30: Halterung
- B: Breitenrichtung
- L: Längsrichtung
- R: Richtung ohne Biegung

## Patentansprüche

1. Kühlvorrichtung (2) zur Flüssigkeitskühlung, insbesondere eines Motors eines Motorrads, wobei die Kühlvorrichtung (2) ein plattenförmiges Kühlnetz (3) für den Wärmeaustausch zwischen einem Kühlmittel und Umgebungsluft aufweist, wobei das Kühlnetz (3) einen ebenen Mittelbereich (12) aufweist, wobei das Kühlnetz (3) an mindestens zwei, vorzugsweise gegenüberliegenden, Seiten des ebenen Mittelbereichs (12) jeweils eine Biegung (101, 102) aufweist, wobei am ebenen Mittelbereich (12) mindestens ein Lüfter (14) angeordnet ist, der Lüfter (14) direkt am Kühlnetz (3), vorzugweise ohne Zwischenraum, angeordnet ist, **dadurch gekennzeichnet, dass** der Lüfter (14) mittels Befestigungsmittel (15) direkt am Kühlnetz (3) befestigt ist.

2. Kühlvorrichtung (2) nach dem vorhergehenden Anspruch, wobei das Kühlnetz (3) an mindestens zwei gegenüberliegenden Seiten des ebenen Mittelbereichs (12) in die gleiche Richtung gebogen ist, vorzugsweise wobei das gesamte Kühlnetz (3), von einer ersten Seite gesehen konkav und von einer zweiten Seite gesehen konvex ausgebildet ist.

3. Kühlvorrichtung (2) nach einem der vorhergehenden Ansprüche, wobei das Kühlnetz (3) entlang einer Richtung (R) nicht gebogen ist, vorzugsweise wobei diese eine Richtung (R) einer Breitenrichtung (B) des Kühlnetzes (3) entspricht.

4. Kühlvorrichtung (2) nach einem der vorhergehenden Ansprüche, wobei der ebene Mittelbereich (12)
- im Wesentlichen rechteckig ausgeformt ist, und/oder
- im Flächenzentrum des Kühlnetzes (3) angeordnet ist, und/oder
- eine Fläche von mehr als einem Viertel, insbesondere mehr als einem Drittel der Gesamtfläche des Kühlnetzes (3) einnimmt, und/oder
- eine Fläche von 200 bis 400, insbesondere in etwa 330, Quadratzentimeter einnimmt.

5. Kühlvorrichtung (2) nach einem der vorhergehenden Ansprüche, wobei der Lüfter (14) flächenmäßig zum Großteil, bevorzugt zu mehr als drei Viertel, innerhalb des ebenen Mittelbereichs (12) angeordnet ist.

6. Kühlvorrichtung (2) nach einem der vorhergehenden Ansprüche, wobei mindestens eine Halterung (30) zum Befestigen des Kühlnetzes (3) an einem Motorrad am Kühlnetz (3) oder an mindestens einem Seitenband (11) an mindestens einer Stirnseite des Kühlnetzes (3) angeordnet ist, besonders bevorzugt wobei die mindestens eine Halterung (30) durch Löten am Kühlnetz (3) beziehungsweise am mindestens einen Seitenband (11) befestigt ist.

7. Kühlvorrichtung (2) nach dem vorhergehenden Anspruch, wobei sich der ebene Mittelbereich (12) bis an mindestens eine Stirnseite des Kühlnetzes (3) erstreckt, wobei das mindestens eine Seitenband (11) der mindestens einen Stirnseite in einem dem ebenen Mittelbereich (12) angrenzenden Abschnitt (29) gerade ausgeformt ist und wobei die mindestens eine Halterung (30) an diesem geraden Abschnitt (29) des mindestens einen Seitenbands (11) angeordnet ist.

8. Kühlvorrichtung (2) nach einem der vorhergehenden Ansprüche, wobei
- das Kühlnetz (3) und/oder
- mindestens eine Halterung (30) zum Befestigen des Kühlnetzes (3) an einem Motorrad und/oder
- mindestens ein Seitenband (11) an einer Stirnseite des Kühlnetzes (3)
aus Aluminium gefertigt sind.

9. Kühlvorrichtung (2) nach einem der vorhergehenden Ansprüche, wobei an einer dem ebenen Mittelbereich (12) gegenüberliegenden Seite mindestens einer, vorzugsweise beider, Biegung(en) (101, 102)
- ein ebener Seitenbereich (13) des Kühlnetzes (3), und/oder
- ein Kühlmitteleinlass (7) und/oder ein Kühlmittelauslass (8), und/oder
- ein Kühlmittelbehälter (4, 41, 42)
angeordnet ist.

10. Motorrad mit einer Kühlvorrichtung (2) nach einem der vorhergehenden Ansprüche, wobei das Kühlnetz (3) zwischen dem Vorderrad und dem Motor des Motorrads angeordnet ist.

11. Motorrad nach dem vorhergehenden Anspruch, wobei das Kühlnetz (3) an mindestens zwei gegenüberliegenden Seiten des ebenen Mittelbereichs (12) in die Richtung des Vorderrads gebogen ist.

12. Verfahren zur Herstellung einer Kühlvorrichtung (2) nach einem der Ansprüche 1 bis 9, mit den folgenden Verfahrensschritten:
- Bereitstellen eines im Wesentlichen plattenförmigen, ebenen, vorzugweise rechteckigen, Kühlnetzes (3),
- Biegen des Kühlnetzes (3) an mindestens zwei Stellen, sodass das Kühlnetz (3) an mindestens zwei, vorzugsweise gegenüberliegenden, Seiten eines ebenen Mittelbereichs (12) jeweils eine Biegung (101, 102) aufweist,
- wobei am ebenen Mittelbereich (12) mindestens ein Lüfter (14) angeordnet wird, wobei der Lüfter (14) direkt am Kühlnetz (3), vorzugweise ohne Zwischenraum, angeordnet wird und wobei der Lüfter (14) mittels Befestigungsmittel (15) direkt am Kühlnetz (3) befestigt wird.

13. Verfahren nach dem vorhergehenden Anspruch, mit den folgenden Verfahrensschritten:
- Anordnen mindestens eines Lüfters (14) am ebenen Mittelbereich (12), wobei der Lüfter (14) direkt am Kühlnetz (3), vorzugsweise ohne Zwischenraum, angeordnet wird,
- Befestigen des mindestens einen Lüfters (14) mittels Befestigungsmittel (15) direkt am Kühlnetz (3).

14. Verfahren nach Anspruch 12 oder 13, wobei das Kühlnetz (3) vor dem Biegen gelötet wird, vorzugsweise wobei vor dem Löten am Kühlnetz (3) oder an mindestens einem Seitenband (11) an mindestens einer Stirnseite des Kühlnetzes (3) mindestens eine Halterung (30) angeordnet wird und wobei die mindestens eine Halterung (30) beim Löten des Kühlnetzes (3) am Kühlnetz (3) beziehungsweise am mindestens einen Seitenband (11) mitangelötet wird.

## Claims

1. A cooler (2) for cooling liquid, in particular of an engine of a motorcycle, wherein the cooler (2) has a plate-like cooler core (3) for exchanging heat between a coolant and ambient air, wherein the cooler core (3) has a planar middle region (12), wherein the cooler core (3) has a bend (101, 102) on at least two side, preferably opposite sides, of the planar middle region (12), wherein the at least one fan (14) is arranged on the planar middle region (12), the fan is arranged directly on the cooler core (3), preferably without an intermediate space, **characterized in that** the fan (14) is attached directly to the cooler core (3) by means of fastening means (15).

2. The cooler (2) according to the preceding claim, wherein the cooler core (3) is bent in the same direction at least at two opposite sides of the planar middle region (12), preferably wherein the entire cooler core (3) is formed concave as seen from a first side and convex as seen from a second side.

3. The cooler (2) according to one of the preceding claims, wherein the cooler core (3) is not bent along a direction (R), preferably wherein said direction (R) corresponds to a width direction (B) of the cooler core (3).

4. The cooler (2) according to one of the preceding claims, wherein the planar middle region (12)
- is formed substantially rectangular, and/or
- is arranged in the center of the area of the cooler core (3), and/or
- occupies an area of more than one quarter, in particular more than one third, of the total area of the cooler core (3), and/or
- occupies an area of 200 to 400, in particular of approximately 330, square centimeters.

5. The cooler (2) according to one of the preceding claims, wherein the fan (14) is arranged for the most part, preferably by more than three quarters, within the planar middle region (12).

6. The cooler (2) according to one of the preceding claims, wherein at least one bracket (30) for fastening the cooler core (3) to a motorcycle is arranged on the cooler core (3) or on at least one side strip (11) on at least one front side of the cooler core (3), particularly preferably wherein the at least one bracket (30) is fastened to the cooler core (3) or to the at least one side strip (11) by brazing.

7. The cooler (2) according to the preceding claim, wherein the planar middle region (12) extends as far as at least one front side of the cooler core (3), wherein the at least one side strip (11) of the at least one front side is formed straight in a portion (29) adjoining the planar middle region (12), and wherein the at least one bracket (30) is arranged on said straight portion (29) of the at least one side strip (11).

8. The cooler (2) according to one of the preceding claims, wherein
- the cooler core (3) and/or
- at least one bracket (30) for fastening the cooler core (3) to a motorcycle and/or
- at least one side strip (11) on a front side of the cooler core (3)
are manufactured from aluminum.

9. The cooler (2) according to one of the preceding claims, wherein, at a side of at least one, preferably both, bend(s) (101, 102) that is situated opposite the planar middle region (12), there is arranged
- a planar side region (13) of the cooler core (3), and/or
- a coolant inlet (7) and/or a coolant outlet (8), and/or
- a coolant reservoir (4, 41, 42).

10. A motorcycle having a cooler (2) according to one of the preceding claims, wherein the cooler core (3) is arranged between the front wheel and the engine of the motorcycle.

11. The motorcycle according to the preceding claim, wherein the cooler core (3) is bent, at least at two opposite sides of the planar middle region (12), in the direction of the front wheel.

12. A method for producing a cooler (2) according to one of claims 1 to 9, having the following method steps:
- providing a substantially plate-like, planar, preferably rectangular, cooler core (3),
- bending the cooler core (3) in at least two places such that the cooler core (3) has a bend (101, 102) at each of at least two preferably opposite sides of a planar middle region (12),
- wherein at least one fan (14) is arranged on the planar middle region (12), the fan (14) being arranged on the cooler core (3), preferably without an intermediate space, and the fan (14) being attached directly to the cooler core (3) by means of fastening means (15).

13. The method according to the previous claim, having the following method steps:
- arranging at least one fan (14) on the planar middle region (12), wherein the fan (14) is arranged directly on the cooler core (3), preferably without an intermediate space,
- fastening the at least one fan (14) directly to the cooler core (3) by means of fastening means (15).

14. The method according to claim 12 or 13, wherein the cooler core (3) is brazed before the bending, preferably wherein, before the brazing, at least one bracket (30) is arranged on the cooler core (3) or on at least one side strip (11) on at least one front side of the cooler core (3), and wherein, during the brazing of the cooler core (3), the at least one bracket (30) is concomitantly brazed onto the cooler core (3) or onto the at least one side strip (11).

## Revendications

1. Dispositif de refroidissement (2) pour refroidissement par liquide, en particulier d'un moteur d'une motocyclette, dans lequel le dispositif de refroidissement (2) présente un réseau de refroidissement (3) en forme de plaque pour l'échange de chaleur entre un liquide de refroidissement et l'air ambiant, dans lequel le réseau de refroidissement (3) présente une zone centrale plane (12), dans lequel le réseau de refroidissement (3) présente respectivement une courbure (101, 102) sur au moins deux côtés, de préférence opposés, de la zone centrale plane (12), dans lequel au moins un ventilateur (14) est disposé sur la zone centrale plane (12), le ventilateur (14) est disposé directement sur le réseau de refroidissement (3), de préférence sans espace intermédiaire, **caractérisé en ce que** le ventilateur (14) est fixé directement sur le réseau de refroidissement (3) à l'aide de moyens de fixation (15).

2. Dispositif de refroidissement (2) selon la revendication précédente, dans lequel le réseau de refroidissement (3) est courbé dans la même direction sur au moins deux côtés opposés de la zone centrale plane (12), de préférence dans lequel l'ensemble du réseau de refroidissement (3) est réalisé de manière concave vu d'un premier côté et de manière convexe vu d'un deuxième côté.

3. Dispositif de refroidissement (2) selon l'une quelconque des revendications précédentes, dans lequel le réseau de refroidissement (3) n'est pas courbé le long d'une direction (R), de préférence dans lequel celle-ci correspond à une direction (R) d'une direction de largeur (B) du réseau de refroidissement (3).

4. Dispositif de refroidissement (2) selon l'une quelconque des revendications précédentes, dans lequel la zone centrale plane (12)
- est de forme sensiblement rectangulaire, et/ou
- est disposée au centre de surface du réseau de refroidissement (3), et/ou
- occupe une surface de plus d'un quart, en particulier plus d'un tiers de la surface totale du réseau de refroidissement (3), et/ou
- occupe une surface de 200 à 400, en particulier environ 330, centimètres carrés.

5. Dispositif de refroidissement (2) selon l'une quelconque des revendications précédentes, dans lequel le ventilateur (14) est disposé en surface en grande partie, de préférence à plus de trois quarts, à l'intérieur de la zone centrale plane (12).

6. Dispositif de refroidissement (2) selon l'une quelconque des revendications précédentes, dans lequel au moins un support (30) pour la fixation du réseau de refroidissement (3) est disposé sur une motocyclette sur le réseau de refroidissement (3) ou sur au moins une bande latérale (11) sur au moins une face frontale du réseau de refroidissement (3), de manière particulièrement préférée dans lequel l'au moins un support (30) est fixé par soudage sur le réseau de refroidissement (3) ou sur au moins une bande latérale (11).

7. Dispositif de refroidissement (2) selon la revendication précédente, dans lequel la zone centrale plane (12) s'étend jusqu'à au moins une face frontale du réseau de refroidissement (3), dans lequel l'au moins une bande latérale (11) de l'au moins une face frontale est de forme droite dans une section (29) adjacente à la zone centrale plane (12) et dans lequel l'au moins un support (30) est disposé sur cette section (29) droite de l'au moins une bande latérale (11).

8. Dispositif de refroidissement (2) selon l'une quelconque des revendications précédentes, dans lequel
- le réseau de refroidissement (3) et/ou
- au moins un support (30) pour la fixation du réseau de refroidissement (3) sur une motocyclette et/ou
- au moins une bande latérale (11) sur une face frontale du réseau de refroidissement (3)
sont fabriqués en aluminium.

9. Dispositif de refroidissement (2) selon l'une quelconque des revendications précédentes, dans lequel, sur un côté d'au moins une, de préférence des deux, courbure(s) (101, 102) opposé à la zone centrale plane (12), est disposé(e)
- une zone latérale plane (13) du réseau de refroidissement (3), et/ou
- une entrée de liquide de refroidissement (7) et/ou une sortie de liquide de refroidissement (8), et/ou
- un réservoir de liquide de refroidissement (4, 41, 42).

10. Motocyclette avec un dispositif de refroidissement (2) selon l'une quelconque des revendications précédentes, dans laquelle le réseau de refroidissement (3) est disposé entre la roue avant et le moteur de la motocyclette.

11. Motocyclette selon la revendication précédente, dans laquelle le réseau de refroidissement (3) est courbé en direction de la roue avant sur au moins deux côtés opposés de la zone centrale plane (12).

12. Procédé pour la fabrication d'un dispositif de refroidissement (2) selon l'une quelconque des revendications 1 à 9, avec les étapes de procédé suivantes :
- la mise à disposition d'un réseau de refroidissement (3) sensiblement en forme de plaque, plan, de préférence rectangulaire,
- le cintrage du réseau de refroidissement (3) en au moins deux endroits, de sorte que le réseau de refroidissement (3) présente respectivement une courbure (101, 102) sur au moins deux côtés, de préférence opposés, d'une zone centrale plane (12),
- dans lequel au moins un ventilateur (14) est disposé sur la zone centrale plane (12), dans lequel le ventilateur (14) est disposé directement sur le réseau de refroidissement (3), de préférence sans espace intermédiaire, et dans lequel le ventilateur (14) est fixé directement sur le réseau de refroidissement (3) à l'aide de moyens de fixation (15).

13. Procédé selon la revendication précédente, avec les étapes de procédé suivantes :
- la disposition d'au moins un ventilateur (14) sur la zone centrale plane (12), dans lequel le ventilateur (14) est disposé directement sur le réseau de refroidissement (3), de préférence sans espace intermédiaire,
- la fixation de l'au moins un ventilateur (14) directement sur le réseau de refroidissement (3) à l'aide de moyens de fixation (15).

14. Procédé selon la revendication 12 ou 13, dans lequel le réseau de refroidissement (3) est soudé avant le cintrage, de préférence dans lequel au moins un support (30) est disposé avant le soudage sur le réseau de refroidissement (3) ou sur au moins une bande latérale (11) sur au moins une face frontale du réseau de refroidissement (3) et dans lequel l'au moins un support (30) est co-soudé lors du soudage du réseau de refroidissement (3) sur le réseau de refroidissement (3) ou sur au moins une bande latérale (11).
